# EUROPÄISCHE PATENTANMELDUNG

(11) **EP 1 084 817 A2**
(43) Veröffentlichungstag der Anmeldung: **21.03.2001**
(21) Anmeldenummer: 00202778.7
(22) Anmeldetag: 04.08.2000
(51) Int. Cl.: B29C 65/64

(54) **Verfahren zum Einbetten von Befestigungskörpern in Kunststoffkörpern und Anlage für dessen Ausführung**

(30) Priorität: 27.08.1999 IT BZ990037
(71) Anmelder: Seeber S.r.l., 39055 Laives (IT)
(72) Erfinder: Resch, Egon, 39050 Tiers (IT)
(74) Vertreter: Faraggiana, Vittorio, Dr. Ing.

(57) **Zusammenfassung**

Beschrieben wird ein Verfahren zum Einbetten von Befestigungskörpern in Grundstoffkörpern, umfassend die folgenden Arbeitsschritte: a)Anbringen eines rotationssymmetrischen, mit Verankerungsstellen an der Außenfläche (24) versehenen Befestigungskörpers (12) an einem Dreh- und Stelltrieb (16) um und längs der Rotationssymmetrieachse (22); b)Drehen des Dreh- und Stellantriebes (16) mit einer Beschleunigung bis zu einer vorgegebenen Drehgeschwindigkeit. Gemäß der Erfindung umfasst das Verfahren überdies die folgenden Arbeitsschritte:
c) Vorschub des Dreh- und Stelltriebes (16) in Axialrichtung mit einer festgelegten Vorschubgeschwindigkeit; d) in Berührung bringen des Befestigungskörpers (12) mit einem Formsitz (14) des Grundstoffbasiskörpers (10), der in einer festliegenden Stellung auf einem Auflager (18) gehalten wird; e) Plastifizieren lassen des Basiskörperwerkstoffes (10), f) Eintreten lassen des in Flüssigzustand versetzten Werkstoffes in die Ausnehmungen der Verankerungsstellen; g) Verfestigen lassen des flüssigen Werkstoffes; h) Zurückziehen des Dreh-und Stellantriebes (16).

## Beschreibung

Die vorliegende Erfindung bezieht sich auf ein Verfahren zum Einbetten von Befestigungskörpern in Kunststoffkörpern und auf eine Anlage für dessen Ausführung gemäß dem Oberbegriff jeweils des Anspruchs 1 und des Anspruchs 2.

Bekannte Verfahren und Anlagen ähnlicher Art werden üblicherweise zum Befestigen von Befestigungskörpern aus Metall, wie Buchsen, verwendet, so z.B. durch Ultraschallschweißen, Einbetten von Körpern durch Erhitzen mit dem anzubringenden Körper, der während des Montagevorgangs festgehalten wird. Diese Verfahren und Anlagen erfordern einen erheblichen Energieaufwand und bei Verwendung des Ultraschallverfahrens, gewährleisten sie nicht einen ausreichenden Abziehwiderstand des angebrachten Körpers. Ein Verwendungsbeispiel in diesem Sinne ist durch ein Montageverfahren dargestellt, bei dem zwei gegenseitig zu verschraubende Gegenstände hohen Beanspruchungen ausgesetzt sind, wobei einer der Gegenstände aus Kunststoff besteht.

In der Praxis kommt es häufig vor, dass die Radialabmessungen des Kegelsitzes am thermoplastischen Bestandteil die Neigung besitzen, mehr oder weniger von den Sollabmessungen wegen Veränderungen in der Produktion abzuweichen und nicht mehr den Ansprüchen entsprechen, die den Toleranzen bei den Montagevorgehen herkömmlicher Art gesetzt sind. Überdies sind am Zusammenbauort die Montagevorrichtungen häufig Verunreinigungen ausgesetzt und müssen daher oft gewartet werden.

Eine der Aufgaben der vorliegenden Erfindung liegt darin, die Nachteile der Verfahren und der Anlagen bekannter Art zu beseitigen und ein Verfahren vorzuschlagen, bei welchem mit einem Mindestaufwand an Energie es gelingt, einen rotationssymmetrischen Körper mit einem Kunststoffkörper zu verbinden und ein Höchstmaß an möglichsten Widerstand gegen ein Lösen der beiden verbundenen Gegenständen sicherzustellen.

Eine weitere Aufgabe liegt darin, mit Einfachheit die Montageanlage einstellen zu können und die Wartung weniger problematisch zu gestalten, wobei ein rasches Hochfahren der Anlage selbst sichergestellt wird.

Eine weitere Aufgabe liegt darin, dass mit einem Höchstmaß an Automatisierung gearbeitet werden kann, wobei gleichzeitig die auferlegten Passtolleranzen eingehalten werden sollen.

Diese und weitere Aufgaben werden erfindungsgemäß bei einem Verfahren durch den kennzeichnenden Teil des Anspruchs 1 und bei einer Anlage durch den kennzeichnenden Teil des Anspruchs 2 gelöst.

Wie aus den Patentansprüchen hervorgeht, wird ein rotationssymmetrischer Körper aus Metall auf einer Spindel aufgebracht, diese wird nach erfolgter Montage unter Beschleunigung auf eine vorgegebene Drehgeschwindigkeit in Umlauf gebracht, dann wird der sich drehende Spindelkopf mit einer festgelegten Vorschubgeschwindigkeit axial vorgeschoben und dieser bringt den Befestigungskörper mit einem Formsitz des Basiskörpers aus Kunststoff in Berührung, der zweckmäßiger Weise in einer festen Stellung gehalten wird.

Durch die Reibung bzw. die Kontaktreibung zwischen dem zu montierenden Körper und dem Basiskörper, wird die kinetische Energie der Spindeln in Wärmeenergie umgewandelt, bis der Kunststoff zur Plastifizierung gebracht wird. Der Befestigungskörper wird weiterhin bis zu einer Endstellung vollständiger Montage vorgerückt, während beim Vorschub des Befestigungskörpers dem Kunststoff, dieser verflüssigt an Verankerungsstellen des Befestigungskörpers eindringen kann, beispielsweise an Hinterschneidungen, die ein Ausziehen des Befestigungskörpers in Vorschubrichtung verhindern. Das flüssige Material wird durch eine Presskraft zusammengedrückt, die in Abhängigkeit des Flüssigkeitsgrades des Kunststoffes veränderlich ist. Nachfolgend wird die Spindel mit Verzögerung angehalten. Der an den Verankerungsstellen in die Oberfläche des Befestigungskörpers eingebrachte flüssige Werkstoff beginnt sich zu verfestigen, bis der Umwandlungsvorgang vervollständigt ist, und durch diesen umkehrbaren Vorgang bildet sich eine Verankerung ohne Spannungen zwischen den Werkstoffen. Die Spindel wird schließlich abgezogen, beispielsweise vom Befestigungskörper abgeschraubt.

In einer Ausführungsform besteht der Befestigungskörper aus einer kegelförmigen Buchse mit gerändelter Außenfläche und Innengewinde und der Aufnahmesitz ist zu derselben mit einem beim Vorgang des Rotationsschweißens zu plastifizierenden Übermaß an Werkstoff komplementär.

In einer weiteren Ausführungsform kann anstatt des außen gerändelten, kegelförmigen Befestigungskörpers ein außen gerändelter, zylinderförmiger Befestigungskörper Verwendung finden.

In einer weiteren, erfindungsgemäßen Ausführung, kann anstatt des Befestigungskörpers mit Innengewinde, der in der Beschreibung nur als Beispiel verwendet wird, eine beliebige Gestaltung in der Ausführung des Befestigungskörpers gewählt werden, wobei nur die kreisförmige Außenform für den Befestigungsbereich ausschlaggebend ist, der durch die rotierende Befestigungsbewegung gekennzeichnet ist.

In einer weiteren Ausführungsform kann, anstatt den Befestigungskörper am Arbeitszylinder für dessen Montage im Bereich eines Spindelkopfes anzuschrauben, die Montage zwischen Befestigungskörper und Zylinderkopf aufgrund eines Formschlusses erfolgen.

In einer weiteren Ausführungsform kann eine Buchse mit metrischem Innengewinde Verwendung finden.

Anstatt einer Buchse mit Innengewinde ist auch möglich, einen Gewindestift, beispielsweise mit metrischem Gewinde zu verwenden.

Verschieden können die Abmessungen der Metallbuchse oder des Metallstiftes sein, die außer die Möglichkeit, ein Innengewinde M8 und M6 zu besitzen, auch kleinere oder auch größere Gewinde in Zoll besitzen können.

Anstatt einem Formsitz für die Buchse zu verwenden, kann diese auch von einer einfachen Bohrung aufgenommen werden, vor allem bei zylindrischen Buchsen.

Die für die Buchse verwendeten Werkstoffe können nicht nur aus Messing, sondern bevorzugter Weise auch aus Stahl, oberflächenbehandeltem Stahl oder rostfreiem Stahl bestehen oder auch aus irgend einem weiteren Metall oder auch einem Thermoplasten oder Duroplasten. Von Bedeutung ist, dass der Werkstoff der Buchse einen Schmelzpunkt besitzt, der höher liegt als jener des festliegenden Basiskörpers. Der erste Werkstoff besitzt den Vorteil, dass der größere Widerstandskräfte aufnehmen kann und der zweite dass er recyclingfreundlicher ist.

In einer weiteren Ausführungsform kann der Befestigungskörper auch die Aufgabe einer Dichtung mit oder ohne Dichtungskörper besitzen.

Verschiedenartig können die Werkstoffe des mit dem Befestigungskörper zu versehenden Basiskörpers sein, wie beispielsweise ein mit bis zu 30% Glasfasern verstärktes Polyamid, Polyamid 6,6, Polystyrol, ABS (Acrylbutadienstyrol), Polyoxymethylen, Polyethylen, Polypropylen in der verstärkten oder nicht verstärkten Form, mit Zusatzstoffen oder strukturiert.

Weitere Merkmale und Einzelheiten der erfindungsgemäßen Anlage gehen aus der folgenden Beschreibung einer bevorzugten Ausführungsform unter Bezugnahme auf die beigefügte Zeichnung hervor. Es zeigen,

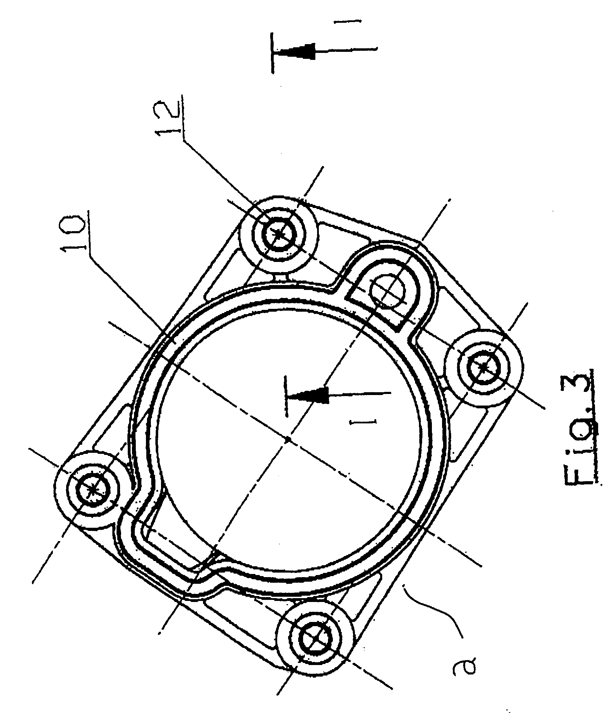

- Figur 1: den Schnitt längs der Schnittlinie I-I aus Figur 3;
- Figur 2: die Einzelheit aus Figur 1, montiert in einer erfindungsgemäßen Befestigungsanlage in Seitenansicht, von der schematisch nur die Arbeitseinheit dargestellt ist;
- Figur 3: eine Draufsicht auf einen Basiskörper in der Form eines Flansches.

Wie in den Figuren dargestellt, ist der Basiskörper 10 mit Befestigungskörpern in der Form von Buchsen 12 in Formsitzen 14 auszurüsten, die im Basiskörper 10 ausgenommen sind, bzw. in einem Verbindungsflansch, mit dem ein Bestandteil aus dem Automobilsektor versehen sein kann. Jede Buchse 12 weist eine gerändelte Außenfläche 24 auf und ist beispielsweise in Messing ausgeführt. Die Ausbildung der Buchse 12 ist im vorliegenden Fall kegelförmig, sie könnte jedoch eine beliebige andere rotationssymmetrische Form aufweisen. Die Buchse 12 ist überdies mit einem Innengewinde versehen.

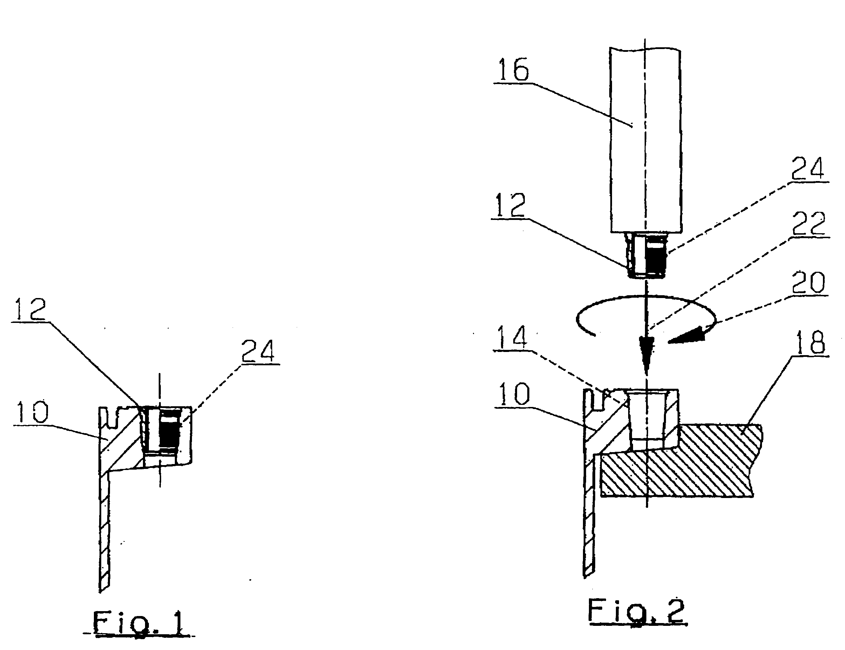

Gemäß der Erfindung ist für die Montage der Buchse 12 in den Sitzen 14 eine Montageanlage vorgesehen, die ein nicht gezeigtes Gestell, einen Spindelkopf 16, der auf bekannte Art und Weise im Gestell längs der Achse 20 verstellbar aufgenommen ist und um die Achse 22 im Drehsinn 20 über einen nicht gezeigten Antrieb drehangetrieben ist, und eine Auflage 18 umfasst, die dazu bestimmt ist, den Basiskörper 10 im Bereich seines Sitzes 14 fest aufzunehmen, so wie in Figur 2 gezeigt.

Der Spindelkopf 16 ist auf bekannte Art und Weise mit abnehmbaren Kupplungsmitteln mit der Buchse 12 versehen, um diese drehfest mit dem Spindelkopf 16 zu drehen und in Richtung des Basiskörpers 18 zu verstellen. Im vorliegenden Fall ist der Spindelkopf mit einem Abschnitt mit Außengewinde versehen, der mit der Buchse 12 verschraubbar ist.

Die Betriebsweise der erfindungsgemäßen Anlage ist im wesentlichen wie folgt:

Der Spindelkopf 16 wird in die Buchse 12 bis zu einem Anschlag in einer gegebenen gegenüber dem Sitz 14 angehobenen und mit der Achse 22 ausgerichteten Stellung eingeschraubt. Die Spindel 16 wird mit einer bestimmten Umdrehzahl in Abhängigkeit des Werkstoffes des Basiskörpers 10 in Einschraubrichtung in die Buchse 12 drehangetrieben und in Richtung des Sitzes 14 vorgeschoben, um das Übermaß an Material im Sitz 14 zu reiben und sich in eine Stellung zu bringen, wo die Buchse 12 vollständig vom Sitz 14 aufgenommen ist. Durch die Reibung wird der Werkstoff des Basiskörpers 10 plastifiziert und der im wesentlichen in den Flüssigzustand gebrachte Werkstoff dringt in die Ausnehmungen der Rändelung 24 der Buchse 12 ein. Der in die Ausnehmungen eingedrungene Werkstoff wird verfestigt gelassen und verankert sich an der Rändelung, mit der er daher einstückig mit einem Höchstmaß an Auszugswiderstand der Buchse 12 verbunden ist. Die Spindel 16 wird dann in Ausschraubrichtung drehangetrieben, wobei sie sich von der Buchse befreit und es kann ein neuer Montagevorgang beginnen.

## Patentansprüche

1. Verfahren zum Einbetten von Befestigungskörpern in Basiskörpern, umfassend die folgenden Arbeitsschritte:
a) Anbringen eines rotationssymmetrischen, mit Verankerungsstellen an der Außenfläche (24) versehenen Befestigungskörpers (12) an einem Dreh- und Stelltrieb (16) um und längs der Rotationssymmetrieachse (22);
b) Drehen des Dreh- und Stelltriebes (16) mit einer Beschleunigung bis zu einer vorgegebenen Drehgeschwindigkeit;
dadurch gekennzeichnet, dass es überdies die folgenden Arbeitsschritte umfasst:
c) Vorschub des Dreh- und Stellantriebes (16) in Axialrichtung mit einer festgelegten Vorschubgeschwindigkeit;
d) in Berührung bringen des Befestigungskörpers (12) mit einem Formsitz (14) des Grundstoffbasiskörpers (10), der in einer festliegenden Stellung auf einem Auflager (18) gehalten wird;
e) Plastifizieren lassen des Basiskörperwerkstoffes (10),
f) Eintreten lassen des in Flüssigzustand versetzten Werkstoffes in die Ausnehmungen der Verankerungsstellen;
g) Verfestigen lassen des flüssigen Werkstoffes;
h) Zurückziehen des Dreh- und Stelltriebes (16).

2. Anlage zur Durchführung des Verfahrens nach Anspruch 1, dadurch gekennzeichnet, dass sie umfasst:
einen Dreh- und Stelltrieb (16) um und längs einer Rotationssymmetrieachse (22); Drehmittel, um den Dreh- und Stelltrieb (16) auf eine vorgegebene Drehgeschwindigkeit zu beschleunigen; Mittel zum Vorschub des Dreh- und Stelltriebes (16) axial mit einer festgelegten Vorschubgeschwindigkeit; Mittel des Dreh- und Stelltriebes, um den Befestigungskörper (12) mit einem Formsitz (14) des Kunststoffbasiskörpers (10) in Berührung zu bringen, der in einer festen Stellung am Auflager (18) gehalten wird.

3. Anlage nach den vorstehenden Ansprüchen, dadurch gekennzeichnet, dass der Dreh- und Stelltrieb eine Spindel ist.

4. Anlage nach den vorstehenden Ansprüchen, dadurch gekennzeichnet, dass der Befestigungskörper eine Buchse ist.

5. Anlage nach den vorstehenden Ansprüchen, dadurch gekennzeichnet, dass der Befestigungskörper Verankerungsstellen in der Form einer Rändelung aufweist.

6. Anlage nach den vorstehenden Ansprüchen, dadurch gekennzeichnet, dass der Befestigungskörper eine konische Buchse (12) mit gerändelter Außenfläche und Innenfläche mit Gewinde ist und der sie aufnehmende Sitz (14) zu ihr mit einem zu plastifizierenden Übermaß an Werkstoff bei dem Vorgang der Drehfriktionsverschweißung komplementär ist.

7. Anlage nach den vorstehenden Ansprüchen, dadurch gekennzeichnet, dass der Befestigungskörper eine zylindrische, außen gerändelte Metallbuchse ist.

8. Anlage nach den vorstehenden Ansprüchen, dadurch gekennzeichnet, dass der Befestigungskörper eine Buchse mit metrischem Innengewinde ist.

9. Anlage nach den vorstehenden Ansprüchen, dadurch gekennzeichnet, dass der Befestigungskörper ein Gewindestift, beispielsweise mit metrischem Gewinde ist.

10. Anlage nach den vorstehenden Ansprüchen, dadurch gekennzeichnet, dass die Abmessungen der Metallbüchse oder des Gewindestiftes außer die Möglichkeit metrische Innengewinde M8 und M6 zu besitzen, auch kleinere oder größere Gewinde oder auch Gewinde in Zoll haben können.

11. Anlage nach den vorstehenden Ansprüchen, dadurch gekennzeichnet, dass der Aufnahmesitz eine einfache Bohrung ist.

12. Anlage nach den vorstehenden Ansprüchen, dadurch gekennzeichnet, dass die für den Befestigungskörper verwendeten Werkstoffe wechselweise Messing, Stahl, oberflächenbehandelter Stahl oder rostfreier Stahl, ein beliebiger anderer Werkstoff oder ein Thermoplast oder Duroplast sein können.

13. Anlage nach den vorstehenden Ansprüchen, dadurch gekennzeichnet, dass die Werkstoffe des mit dem Befestigungskörper zu versehenen Basiskörpers ein mit 30% Glasfasern verstärktes Polyamid, Polyamid 6, Polyamid 6,6, Polystyrol, ABS (Acrylbutadienstyrol) Polyoxymethylen, Propylen, in verstärkter oder nicht verstärkter Form, mit Zusätzen oder als Strukturschaum sein können.

14. Anlage nach den vorstehenden Ansprüchen, dadurch gekennzeichnet, dass der Befestigungskörper eine Dichtfunktion mit oder ohne Dichtkörper besitzt.

15. Anlage nach den vorstehenden Ansprüchen, dadurch gekennzeichnet, dass die Montage des Befestigungskörpers am Dreh-und Stelltrieb durch Formschluss erfolgt.

16. Anlage nach den vorstehenden Ansprüchen, dadurch gekennzeichnet, dass die Montage des Befestigungskörpers am Dreh-und Stelltrieb durch Verschrauben erfolgt.

17. Anlage nach den vorstehenden Ansprüchen, dadurch gekennzeichnet, dass die Montage des Befestigungskörpers am Dreh-und Stelltrieb durch Formkupplung erfolgen.
